Europäisches Patentamt

European Patent Office

Office européen des brevets

(19)

(11) **EP 1 486 852 A2**

(12) **EUROPEAN PATENT APPLICATION**

(43) Date of publication:
**15.12.2004 Bulletin 2004/51**

(51) Int Cl.7: **G06F 1/00**

(21) Application number: **04011772.3**

(22) Date of filing: **18.05.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **20.05.2003 JP 2003142593**<br><br>(71) Applicant: **SONY CORPORATION**<br>**Tokyo (JP)** | (72) Inventor: **Nagao, Yutaka, c/o Sony Corporation**<br>**Tokyo (JP)**<br><br>(74) Representative: **Körber, Martin, Dipl.-Phys.**<br>**Mitscherlich & Partner**<br>**Patentanwälte**<br>**Sonnenstrasse 33**<br>**80331 München (DE)** |

(54) **Information processing apparatus, information processing method, and information processing system**

(57)    The present invention is intended to provide a right presentation based on a combination of two or more rights to realize a more flexible right presentation. Disclosed herein is an information processing apparatus which can use content information within a range of usage conditions written in license information, including: a storage element for storing first license information; a receiving element for receiving second license information; and a linking element for linking a part or all of the second license information with the first license information, wherein the content information is used within a range of license information obtained by linking the first license information with the second license information by the linking element.

# FIG. 1

EP 1 486 852 A2

**Description**

BACKGROUND OF THE INVENTION

The present invention relates generally to an information processing apparatus, an information processing method, an information processing system and, more particularly, to an information processing apparatus, an information processing method, and an information processing system which are capable of using content information within a range of usage conditions described in the license information given by copyright holders.

Services for distributing digital content such as music and video for example via networks such as the Internet are widely spread. For example, use of the EMD (Electronic Music Distribution) service based on the Internet allows users to download of digital music content, store the downloaded content in personal computers which are client terminals, and listen to the music on the personal computers.

At this moment, each personal computer starts, under the control of its OS (Operating System), a music recording/reproducing application based on a predetermined copyright protection technology and stores a content file including encrypted digital content and corresponding usage conditions into its HDD (Hard Disk Drive) for example, thereby realizing secure music providing services.

Japanese Patent Laid-open No. Hei 14-359616 filed by the applicant hereof discloses an information processing apparatus and so on that are intended to surely prevent the unauthorized usage of content without hindering its distribution, by means of starting up a music recording/reproducing application based on a predetermined copyright protection technology.

However, the copyright information for a certain piece of digital content is not always of one type and, even if there is only one type, it is practicable to get a plurality of copyright information files for the same digital content.

The problem with the related-art technologies mentioned above is that, if there are a plurality of copyright information files for the same digital content at a client, these files are handled independently and therefore cannot be interlinked at that client. Consequently, there are copyright information files by that quantity at each client, thereby requiring the user to practice copyright selection even when using a single piece of content.

SUMMARY OF THE INVENTION

It is therefore an object of the present invention to provide an information processing apparatus and method and an information processing system that are capable of the copyright representation by combinations of a plurality of copyrights, thereby providing more flexible copyright representation than conventionally practiced.

In carrying out the invention and according to one aspect thereof, there is provided an information processing apparatus which can use content information within a range of usage conditions written in license information, including: a storage element for storing first license information; a receiving element for receiving second license information; and a linking element for linking a part or all of the second license information with the first license information, wherein the content information is used within a range of license information obtained by linking the first license information with the second license information by the linking element.

The information processing apparatus according to the present invention links a part or all of the second license information to the first license information by the linking element and uses content information on the basis of the license information obtained by the linkage.

In carrying out the invention and according to another aspect thereof, there is provided an information processing method which can use content information within a range of usage conditions written in license information, including the steps of: storing first license information; receiving second license information; determining on the basis of license identification information for determining one of overwrite and add attributes whether the second license information received in the receiving step is license information to be overwritten or license information to be added; and linking a part or all of the second license information with the first license information on the basis of a result of the attribute determination made in the determining step, wherein the content information is used within a range of license information obtained by linking the first license information with the second license information in the linking step.

The information processing method according to the present invention links a part or all of the second license information to the first license information by the linking means and uses content information on the basis of the license information obtained by the linkage.

In carrying out the invention and according to still another aspect thereof, there is provided an information processing system having a storage element for storing first license information, a receiving element for receiving second license information, and a linking element for linking a part or all of the second license information with the first license information, the information processing system including: a client which uses content information within a range of license information obtained by linking the first license information with the second license information by the linking means; and a server which sends the second license information to the client on demand thereby through a network.

In the information processing system according to the invention, a part or all of the second license information received from a server on demand by a client is linked with the first license information stored in the storage means of the client and the client uses content information on the basis of the license information obtained by the linkage.

According to the present invention, a right file containing license information may be attached with a linkage attribute in each client and linkage rules corresponding to linkage attributes are arranged for various items of right information to be specified therein, thereby allowing the linkage of two or more right files within each client to realize the use of these files as a single right.

As described and according to the present invention, the information processing apparatus practiced as one embodiment thereof links a part or all of second license information with first license information by a linking means and uses content information on the basis of the resultant linked license information, thereby providing a right presentation based on a combination of two or more rights to realize a more flexible right presentation than ones based on related-art technologies.

As described and according to the present invention, the information processing method practiced as another embodiment thereof links a part or all of second license information with first license information by a linking step and uses content information on the basis of the resultant linked license information, thereby providing a right presentation based on a combination of two or more rights to realize a more flexible right presentation than ones based on related-art technologies.

As described above and according to the invention, the information processing system links a part or all of second license information received from a server on demand by a client with first license information stored in a storage means of the client and allows the user to use content information on the basis of the resultant linked licensed information, thereby providing a right presentation based on a combination of two or more rights to realize a more flexible right presentation on the side of the client than ones based on related-art technologies.

BRIEF DESCRIPTION OF THE DRAWINGS

These and other objects of the invention will be seen by reference to the description, taken in connection with the accompanying drawing, in which:

FIG. 1 is a schematic diagram illustrating a content providing system practiced as one embodiment of the invention;
FIG. 2 is a schematic diagram illustrating the above-mentioned content providing system in more detail;
FIG. 3 is a block diagram illustrating an exemplary configuration of client;
FIG. 4 is a schematic diagram illustrating the transmission of content and its license from server to client;
FIG. 5 is a schematic diagram illustrating a relationship between content and its license;
FIG. 6 is a block diagram illustrating client functions;
FIG. 7 is a block diagram illustrating server functions;
FIG. 8 illustrates an exemplary configuration of an existing or new copyright file;
FIG. 9 is a flowchart describing a procedure of decision processing in a period based on linking rule 2-1 and linking rule 202 practiced as a second embodiment of the invention;
FIG. 10 is a flowchart describing processing of downloading content by client;
FIG. 11 is a flowchart describing the processing of content provision by content server;
FIG. 12 is a format of content which is provided from content server to client;
FIG. 13 is a flowchart describing the processing of content reproduction by client;
FIG. 14 is a flowchart describing the processing of license acquisition by client;
FIG. 15 illustrates an exemplary configuration of license;
FIG. 16 is a flowchart describing the processing of license provision by license server;
FIG. 17 is a flowchart describing the processing of license updating by client; and
FIG. 18 is a flowchart describing the processing of license updating by license server.

DETAILED DESCRIPTION OF THE PREFERRED EMBODIMENTS

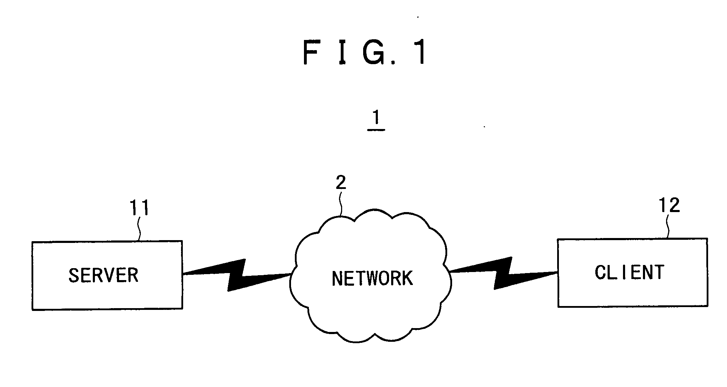

This invention will be described in further detail by way of example with reference to the accompanying drawings. Now, referring to FIG. 1, there is shown an exemplary configuration of a content providing system 1 to which the present invention is applied. The content providing system 1 handles data which are made up of video and/or audio data. A server 11 is connected to a client 12 via a network 2 which is the Internet for example. In this example, only one client 12 is shown; it is apparent that any number of clients may be connected to the network 2.

The client 12 is an information processing apparatus capable of using content information within a range of usage conditions specified in the license information to be described later and stores existing (or first) license information in its storage unit. The client 12 also receives new (or second) license information at its communication block and links a part or all of the new (or second) license information with the existing (or first) license information. The client 12 uses content information within a range of the resultant linked license information.

The linking of license information as used herein is one example of the updating of license information to be described later.

It should be noted that the second license information is itself the license information to be overwritten but includes license identification information for identifying whether it is the license information for addition.

The server 11 provides content to the client 12 and gives the license information necessary for using the provided content. Also, the server 11 sometimes executes accounting processing.

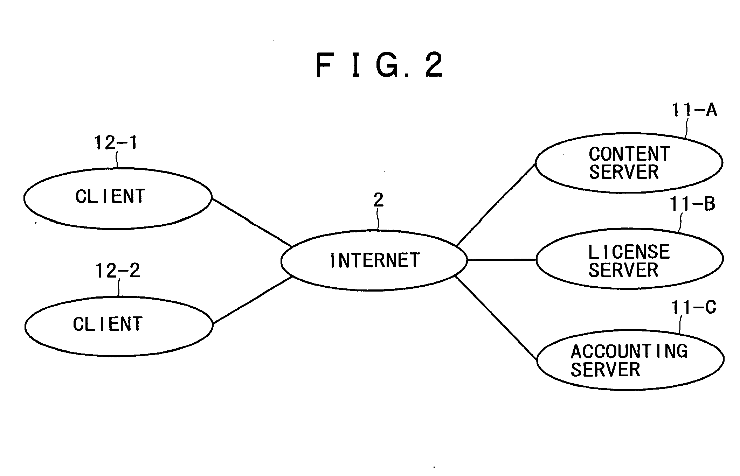

This content providing system may also be described as shown in FIG. 2 for detail. To be more specific, the Internet 2 is connected to clients 12-1 and 12-2 (hereafter referred to simply as the client 12 if there is no need for making distinction between these clients). Obviously, the Internet 2 is connected to a given number of clients as described above. The Internet 2 is also connected to a content server 11-A for providing content to the client 12, a license server 11-B for granting to the client 12 the license necessary for the use of the content provided by the content server 11-A, and a accounting server 11-C for billing the client 12 when it is granted the license.

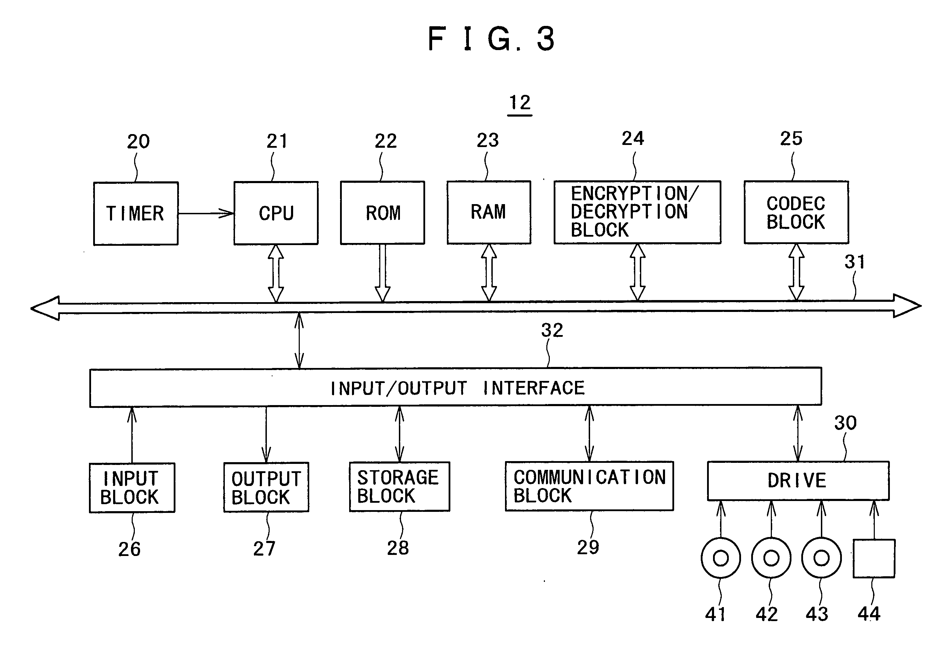

FIG. 3 illustrates an exemplary configuration of the client 12. Referring to FIG. 3, a CPU (Central Processing Unit) 21 executes a variety of processing operations as directed by programs stored in a ROM (Read Only Memory) 22 or loaded from a storage unit 28 into a RAM (Random Access Memory) 23. A timer 20 keeps time and supplies time information to the CPU 21. The RAM 23 also stores data and so on necessary for the CPU 21 to execute a variety of processing operations as required.

An encryption/decryption block 24 encrypts content data and decrypts encrypted content data. A codec block 25 encodes content data by ATRAC3 (Adaptive Transform Acoustic Coding 3) for example and supplies the encoded content data to a semiconductor memory 44 loaded on a drive 30 via an input/output interface 32 and stores the encoded content data on the semiconductor memory 44. Also, the codec block 25 decodes the encoded data read from the semiconductor memory 44 via the drive 30. The semiconductor memory 44 is a so-called memory card for example.

The CPU 21, the ROM 22, the RAM 23, the encryption/decryption block 24, and the codec block 25 are interconnected via a bus 31. The input/output interface 32 is also connected to this bus 31.

The input/output interface 32 is also connected with an input block 26 composed of a keyboard and a mouse for example, an output block 27 composed of a display unit based on CRT or LCD and a speaker for example, the storage unit 28 based on a hard disk drive for example, and a communication block 29 based on a modem or a terminal adaptor for example.

The communication block 29 executes communication processing via the Internet 2, sends data supplied from the CPU 21, and outputs data received from the mate of communication to the CPU 21, the RAM 23, and the storage unit 28. The storage unit 28 transfers information with the CPU 21 to store and delete information. The communication block 29 also communicates analog signals or digital signals with other clients.

The input/output interface 32 is also connected with the drive 30 as required on which a magnetic disk 41, an optical disk 42, a magneto-optical disk 43, or a semiconductor memory 44 for example is loaded as required, computer programs read from any of these recording media being installed into the storage unit 28 as required.

Although not shown, the content server 11-A, the license server 11-B, and the accounting server 11-C are also each configured by a computer which has basically the same configuration as that of the client 12 shown in FIG. 3. Therefore, in what follows, the configuration shown in FIG. 3 is also referred to as the configuration of the server 11.

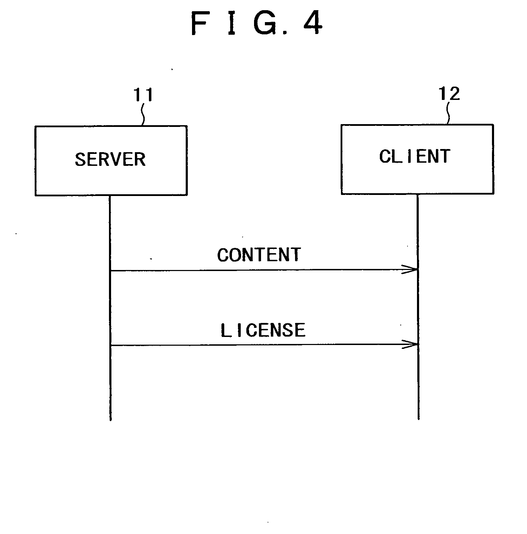

In the content providing system 1, the server 11 sends content and the license information together to the client 12 as shown in FIG. 4. For the client 12 to reproduce content, its license is required.

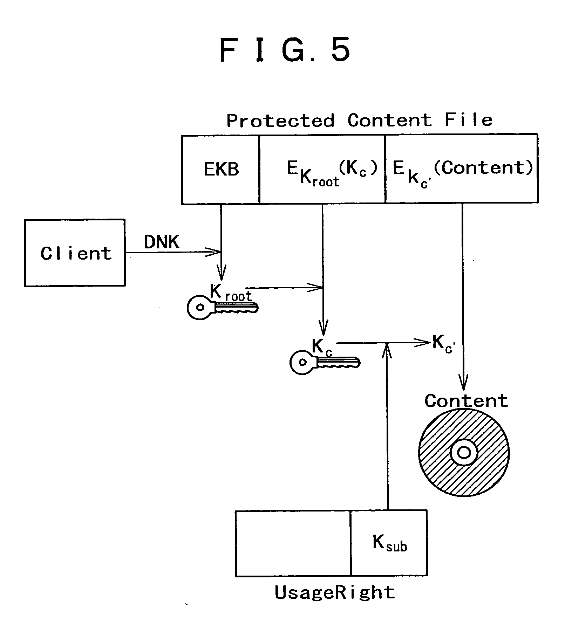

Each piece of content is configured by a content body and its keys for locking the content body in a duplicate manner as shown in FIG. 5. The client 12 decrypts and reproduces the received content body on the basis of the license information and the content. The license information includes a user right (hereinafter referred as UsageRight). The UsageRight is information indicative of the expiration date of content reproducible period, the number of content reproducible times, the number of content can be copied to a recording medium such as CD for example, the number of times content is checked out to a portable device (PD), and other usage conditions.

In the present embodiment of the invention, the client 12 is an information processing apparatus which can use content information within a range of the usage conditions specified in the license information and stores existing (or first) license information in the storage unit 28. Also, the client 12 receives new (or second) license information at the communication block 29. The client 12 links a part or all of the new (or second) license information with the existing (or first) license information. Within a range of the resultant license information linked by the CPU 21, the CPU 21 uses content information.

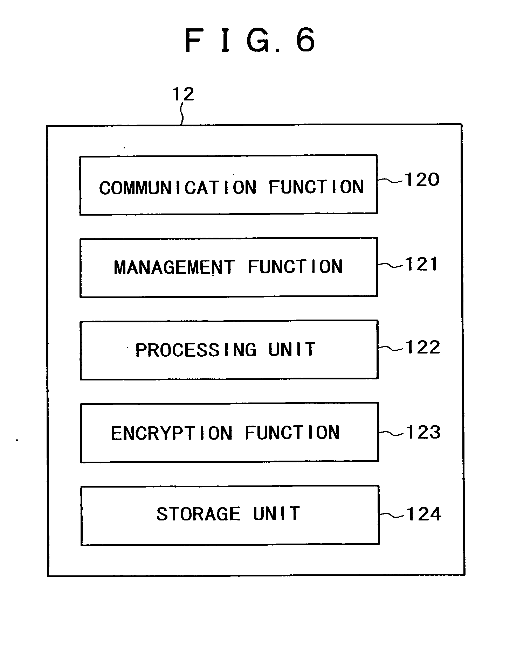

For this reason, the client 12 functions as a functional blocks as shown in FIG. 6 under the control of the CPU 21. A communication function 120 of the client receives messages from the server 11 and passes them to a management function 121. Alternatively, the communication function 120 receives massages from 121 and passes them to the server 11. An encryption function 123 encrypts and decrypts messages by use of a private key shared by the server 11. A management function 122 generates and analyzes messages by partially using the encryption function 123. A storage unit 124 is equivalent to the above-mentioned storage unit 28 and stores the existing (or first) license information. The storage unit 124 also stores the license information after the linkage.

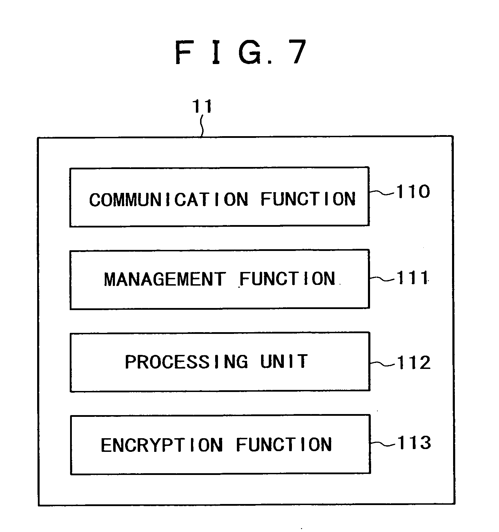

The server 11 functions in accordance with the functional blocks shown in FIG. 7 under the control of the CPU 21. A communication function 110 receives messages from the client 12 and sends the messages to a management function 111. Alternatively, the communication function 110 receives massages from the management function 111 and sends the messages to the client 12. An encryption function 113 encrypts and decrypts messages by use of a private key shared by the client 12. The management function 111 exchanges messages with the client 12 via the communication function 110 to execute the processing in accordance with exchanged messages. Also, the management function 111 generates and analyzes message by partially using the encryption function 113. A processing unit 112 executes the processing requested by the management function 111.

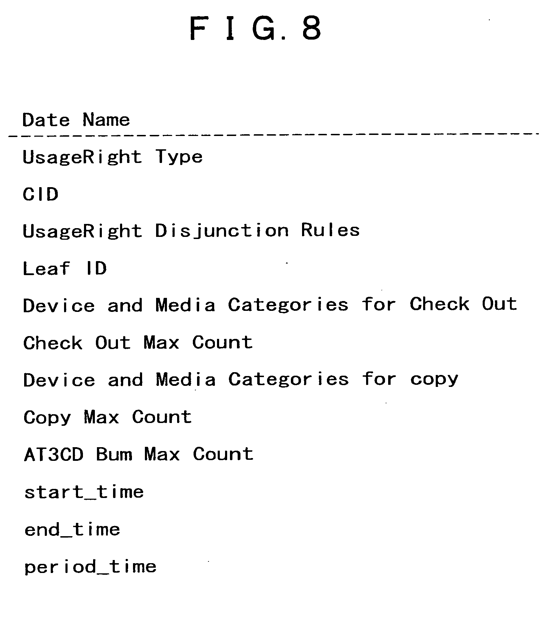

The following describes a simplified data structure of an existing right file and a new right file which store the above-mentioned license information, with reference to FIG. 8. The data structure of the existing right file or the new right file is set for each piece of content. Also, a plurality of right files are set to one piece of content. Alternatively, one right file may be set for a plurality of pieces of content.

First, Data Name is placed. Next comes UsageRight Type. UsageRight Type is followed below with Content ID (CID), UsageRight Disjunction Rules, Leaf ID (or terminal ID), Device and Media Categories for Check Out, Check Out Max Count, Device and Media Categories for Copy, and Copy Max Count, in this order. These are followed by AT3CD Burn Max Count, start_time (absolute time), end_time (absolute time), and period_time (relative time) in this order. All of these items of information need not be always written in one right file; namely, one, two, or any other numbers thereof may be written. Obviously, all of them may be written if necessary. Two or more items of information are used if a flag for specifying a check-out PD is attached with specification count information which will be described later, for example.

UsageRight Type has a flag for identifying whether the existing right file or new right file concerned is of overwrite attribute or add attribute. In addition, if the new right file includes the right to specify a restricted period, this UsageRight Type has an identification flag which determines how to link the relative period of the new right with the absolute period of the existing right.

Content ID is an identification code indicative of to which content this right file (existing right file or new right file) corresponds. The same ID, namely the identification code indicative of to which right file this content corresponds, is also written in each content file. Obviously, this identification code has signature for tamper prevention.

UsageRight Disjunction Rules independently describes rules which can be determined whether yes or no by flag, without correlation. Namely, it specifies several independent rules in this area. For example, 4 bytes are allocated for it in this area. To be more specific, bit 0 can be specified to determine whether or not bit rate conversion can be carried out. The remaining bits 1 through 32 are reserved for later use for the description of rules to determine only yes or no.

**[0042]** Leaf ID is an identification number of each device.

Device and Media Categories for Check Out is described for the specification of a device which can be checked out from a client. Check-out denotes the transfer of content from a client to a portable device (PD). Therefore, Device and Media Categories for Check Out is a flag indicative of a portable device to which content can be transferred from a client. For example, this flag defines three categories; a net-connection type mini disk recording/reproducing device which can record music data through the Internet, a portable device with clock for timer capabilities, and a portable device without clock for timer capabilities. If flag "1" is indicative of check-out enabled, "110" is indicative that PDs to which content can be transferred from a client is a network-connection type mini disk recording/reproducing device and a portable device with clock for timer capabilities; "110" is indicative that content cannot be checked out to any portable devices without clock for timer capabilities. It should be noted that returning checked out content from a PD to the original client is referred to as check-in. It is also practicable to return content which was checked out from a client to a PD to the client again by a check-in operation and then check out this content to the PD again.

Check Out Max Count is the information for specifying a maximum number of times content can be checked out to a portable device to which check-out has been permitted by the above-mentioned Device and Media Categories for Check Out.

Device and Media Categories for Copy is described to specify a device to which content can be copied from a client. Copy denotes the duplication of content from a client to a portable device (PD). Therefore, this information is a flag indicative of a portable device to which content can be copied from a client. As with Device and Media Categories for Check Out described above, this information can define three categories; a net-connection type mini disk recording/reproducing device which can record music data through the Internet, a portable device with clock for timer capabilities, and a portable device without clock for timer capabilities. If flag "1" is indicative of copyable, "110" specifies that PDs which can be copied content from a client are a network-connection type mini disk recording/reproducing device and a portable device with clock for timer capabilities. Copy to any portable devices without clock for timer capabilities is disabled.

Copy Max Count is the information for specifying a maximum number of times content can be copied to a portable device to which copy has been permitted by the above-mentioned Device and Media Categories for Copy.

AT3CD Burn Max Count is the information for specifying a maximum number of times content can be copied to CDs on the basis of ATRAC3 codec.

Information start_time (absolute start time) is indicative of an absolute date and time at which content becomes usable, and information end_time (absolute end time) is indicative of an absolute date and time at which the usability of content ends. Therefore, an absolute period of time in which content is usable is specified by start_time (absolute start time) and end_time (absolute end time).

Information period_time (relative time) is the information for specifying a length of time in which content is usable from a particular date and time.

The above-mentioned items of information are classified into the information for specifying restricted period, the information for specifying flags, and the information for specifying the number of times. The information for restricted period specification is start_time (absolute start time), end_time (absolute end time), and period_time (relative time).

The flag specification information includes UsageRight Disjunction Rules, Device and Media Categories for Check Out, and Device and Media Categories for Copy.

The information for specifying number of times includes Check Out Max Count, Copy Max Count, and AT3CD Burn Max Count.

Each of the above-mentioned existing and new right files of license information is identified whether it is of overwrite attribute or add attribute by the above-mentioned flag of UsageRight Type. Overwrite attribute denotes that, when a new right file is linked with an existing right file (when updating a right file, for example), the license information of the new right file is written over the contents of the existing right file. Add attribute indicates that, when a new right file is linked with an existing right file (when updating a right file, for example), the license information of the new right file is added to the license information of the existing right file.

The following describes, as embodiment 1, embodiment 2, embodiment 3, and embodiment 4, the processing of linking a new right file from the license server 11-B with one existing right file already owned by the client 12.

[Embodiment 1]

The client 12 makes confirmation of the attribute of a new right received from the license server 11-B by use of the above-mentioned flag UsageRight Type. If the attribute of the new right is found to be overwrite attribute by the flag conformation, all right information specified by the existing right is written over with the contents of the new right. At the same time, the status information (or the current usage status) about the existing right internally owned by the client 12 is deleted.

If the attribute of the new right is found to be add attribute by the confirmation of UsageRight Type flag, values are added in according with the rules without involving the loss of the existing right information in the client 12. In this case, the status information (or the current usage status) about the existing right internally held in the client 12 is held to be processed as the status information about the right created by the linkage.

[Embodiment 2]

If the attribute of a new right received from the license server 11-B is found to be add attribute by the confirmation of UsageRight Type flag by the client 12 and the right contents for specifying the above-mentioned period restriction are included as its right information, then the following linkage rules are applied in accordance with the prerequisites included in the new and existing rights.

First, linkage rule 2-1 (the first linage rule of embodiment 2) is as follows. The prerequisite is that the existing right specifies an absolute period by the above-mentioned start_time (absolute start time) and end_time (absolute end time) and the new right also specifies an absolute period. In this case, for a start time limit, linkage rule 2-1 compares the start time limits of both the existing and new rights with each other and uses the earlier one as the start time limit of the linkage result. If one of the time limits is specified as indefinite, the indefinite time limit is used. This rule also compares the end time limits of both the existing and new rights with each other and uses the later one as the end time limit of the linkage result. If one of the time limits is specified as indefinite, the indefinite time limit is used.

Linkage rule 2-2 (the second linkage rule of embodiment 2) is as follows. The prerequisite is that the existing right specifies the above-mentioned absolute period and the new right specifies a relative period by the above-mentioned period_time (relative time). Linkage rule 2-2 in this case is divided into case 1 and case 2 depending on the addition rule of relative periods in the new right. A flag for making distinction between case 1 and case 2 is also written in the above-mentioned UsageRight Type. For example, this distinction is made by checking whether or not a bit at any turn in the UsageRight Type sequence is "1". In case 1 of linkage rule 2-2, the start date and time of the relative period of the new right is used as the content data download date and time, the end date and time is computed by adding the relative period to the above-mentioned start date and time, the start date and time and end date and time in the relative period are compared with the start date and time and end date and time of the existing right, the earlier one is used for the start date and time, and the later one is used for the end date and time. In case 2 of linkage rule 2-2, the start date and time of the relative period is used as the end date and time of the existing right. If the end date of the existing right has passed, the start date and time of the relative period is used as a download time and the end date and time is the date and time which is obtained by adding the relative period to that start date and time.

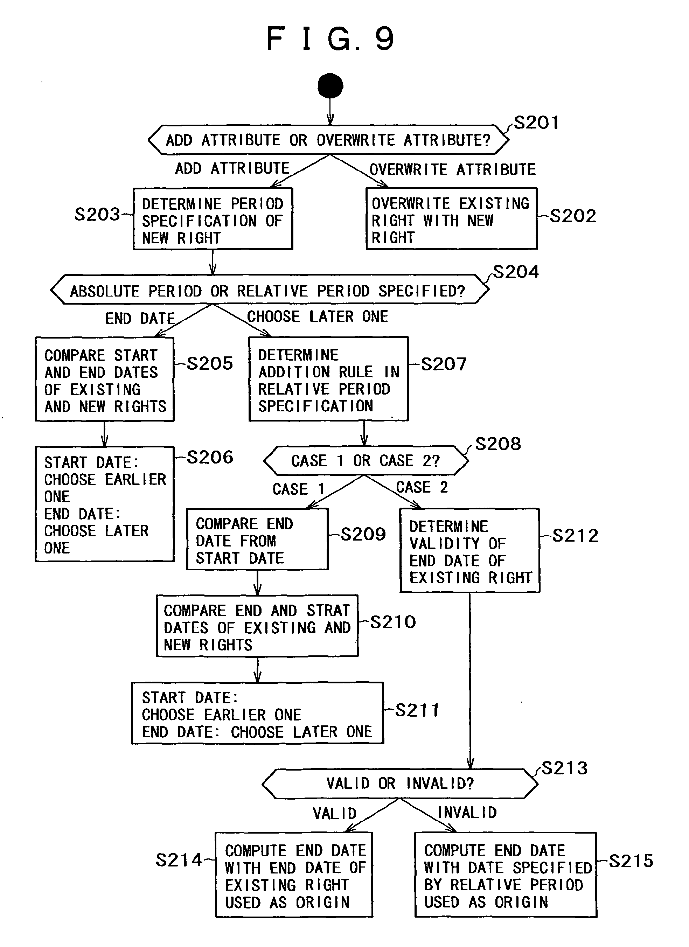

FIG. 9 shows a procedure for determining the period in accordance with the above-mentioned linkage rules 2-1 and 2-2. Each existing right is of an absolute period. In step S201, the client 12 checks the above-mentioned UsageRight Type flag of the right file of the new right received from the license server 11-B to see if its attribute is add or overwrite. If the attribute is found to be add, then the procedure goes to step S202 to write the new right over the existing right.

If the attribute is found to be add in step S201, then the procedure goes to step S203 to determine the period specification of the new right. This determination is made by checking whether start_time (absolute start time) and end_time (absolute end time) are written or period_time is written in the new right file. If the period specification is found specifying an absolute time in step S204, then the procedure goes to step S205 to compare the start date and time of the existing right with that of the new right, and compare the end date and time of the existing right with that of the new right. In step S206, as the start date and time, the result of the earlier one is chosen, and as the end date and time, the result of the later one is chosen.

If the period specification of the new right is found specifying a relative period in step S204, then the procedure goes to step S207 to determine the addition rule in the relative period specification by checking the above-mentioned UsageRight Type flag. If case 1 is identified in step S208 by the above-mentioned flag checking, then the procedure goes to step S209, in which the start date and time of the relative period of the new right is used as content data download date and time, and the end date and time is obtained by adding the relative period to the above-mentioned start date and time. In step S210, the start and end dates and times by the relative period are compared with the start and end dates and times of the existing right, respectively. In step S211, as the start date and time, the result of the earlier one is chosen, and as the end date and time, the result of the later one is chosen.

If case 2 is identified in step S208, then the procedure goes to step S212 to determine the validity of the end date and time of the absolute period of the existing right. In step S213, it is checked whether the end date and time is valid or invalid. If it is found to be valid, then the procedure goes to step S214 to compute the end date and time with the end date and time of the existing right used as the origin. If it is found to be invalid in step S213, it indicates that the end date and time of the existing right has passed, so that, in step S215, the start date and time of the relative period is used as download time, and the end date and time is obtained by adding the relative period to that start date and time.

Linkage rule 2-3 (the third linkage rule of embodiment 2) is as follows. The prerequisite is that the existing right specifies the above-mentioned relative period and the new rights specifies the above-mentioned absolute period. For the start time limit, linkage rule 2-3 in this case compares the start time limits of the existing and new rights with each other and uses the earlier one as the start time limit of the linkage result. However, if one of the time limits is specified as indefinite, the indefinite time limit is used. Alternately, for the end time limit, linkage rule 2-3 in this case compares the end time limits of the existing and new rights with each other and uses the later one as the end time limit of the linkage result. However, if one of the time limits is specified as indefinite, the indefinite time limit is used.

Linkage rule 2-4 (the fourth linkage rule of second embodiment) is as follows. The prerequisite is that both the existing and new rights specify each a relative period. For the start time limit, linkage rule 2-4 in this case compares the start time limits of the existing and new rights each other and uses the earlier one as the start time limit of the linkage result. However, if one of the time limits is specified as indefinite, the indefinite time limit is used. For the end time limit, this rule compares the end time limit of the existing right with a result of adding the period specified by the relative period of the new right to the start time limits of both the existing and new rights. If the computation result is greater than the existing right, this value is used as the end time limit of the linkage result. If the computation result is smaller than the existing right, the end time limit of the existing right is used as the end time limit of the linkage result.

[Embodiment 3]

If the attribute of the new right received from the license server 11-B is found to be add attribute by checking the above-mentioned UsageRight Type flag by the client 12 and its right information includes flag-specifying right contents such as the above-mentioned UsageRight Disjunction Rules, Device and Media Categories for Check Out, and Device and Media Categories for Copy, the linkage rule executes a logical OR operation between the flag values in existing and new rights, and uses a resultant value as the flag value of the linkage result.

A specific example of Device and Media Categories for Check Out is as follows, for example. While those PDs having existing right flags "010" and being capable of checking out content from client are only portable devices having timer capabilities, those PDs having new right flags "100" and being capable of checking out content from client are only network-connection type mini disk recording/reproducing apparatuses; however, because the logical OR between the flags is "110", both the network-connection type mini disk recording/reproducing apparatus and the portable device with timer capabilities can check out content.

[Embodiment 4]

If the attribute of the new right received from the license server 11-B is found to be add attribute by checking the above-mentioned UsageRight Type flag by the client 12 and the right contents for specifying the number of times are included as its right information, the following linage rules are applied in accordance with the prerequisites included in the new and existing rights.

First, linage rule 4-1 (the first linkage rule of embodiment 4) is as follows. The prerequisite is that the existing right is a finite integer 0 or higher and the new right is also a finite integer 0 or higher. In this case, linkage rule 4-1 adds the count values of both the existing and new rights and uses a resultant value as the count value of the linkage result. It should be noted that, if the computation result exceeds a range of integers that can be handled by client, it indicates an unlimited count. The following is a specific example of Check Out Max Count. Namely, if the existing right has a maximum check out count of 10 and the new right has 15, then the linkage result is 25. It should be noted that, if the integers that can be handled by client are up to 22, it indicates an unlimited count.

Linkage rule 4-2 (the second linkage rule of embodiment 4) is as follows. The prerequisite is that the existing rule is limitless and the new right is a finite integer 0 or higher. In this case, the linkage rule 4-2 uses limitless as the count value of the linkage result.

Linkage rule 4-3 (the third linkage rule of embodiment 4) is as follows. The prerequisite is that the existing right is a finite integer 0 or higher and the new right is limitless. In this case, the linkage rule 4-3 uses limitless as the count value of the linkage result.

Linkage rule 4-4 (the fourth linkage rule of embodiment 4) is as follows. The prerequisite is that both the existing and new rights are limitless. In this case, linkage rule 4-4 uses limitless as the count value of the linkage result.

It should be noted that, when a right file is sent from the server 11 upon request by the client 12, the server 11 appends its signature by the private key for signature owned by only the server 11. Then, the right file is sent to the client 12 in the form of right file + server certificate + signature. By use of the server's public key, the client 12 decrypts the signature and checks whether the decryption result matches the received right file, thereby verifying whether the right file has been interpolated in an unauthorized manner.

The existing right file is also appended with the signature by the server 11. If the right file is only partially rewritten or added in condition, the client cannot append the same signature as that of the server because the client does not have the private key owned only by the server. Therefore, the client 12 securely stores the linked file as follows. Namely, the client 12 verifies the server's signature for each right file and then appends the signature to the linked right file by the private key owned only by the client.

According to the content providing system associated with the invention including the above-mentioned embodiment 1 through embodiment 4, the presentation of a combination of two or more rights can be realized unlike the related-art right presenting methods, thereby providing a more flexible way of right presentation.

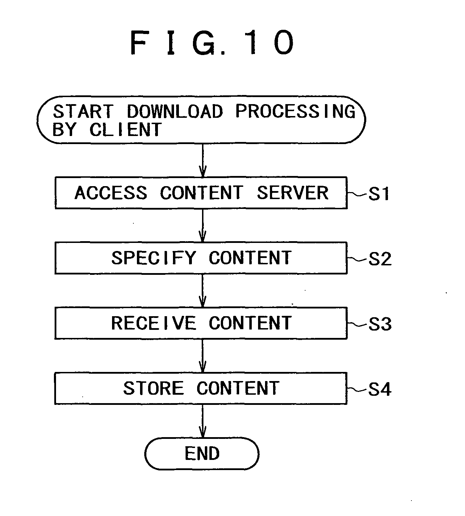

The following describes the details of processing by which the client 12 receives content from the content server 11-A, with reference to the flowchart shown in FIG. 10.

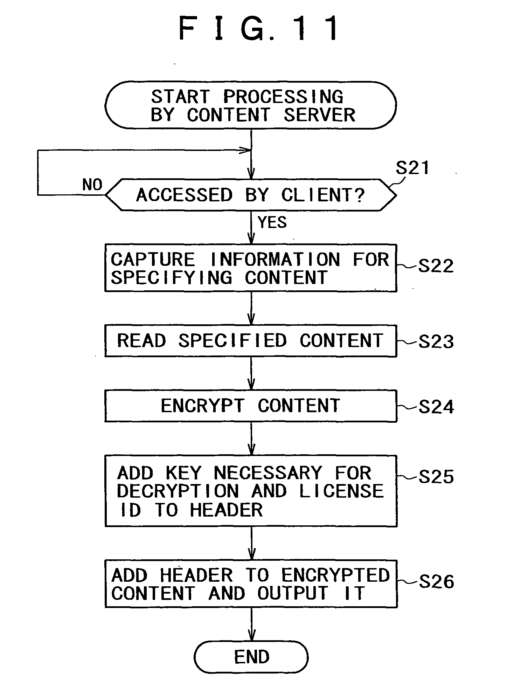

When the user issues an access instruction to the content server 11-A through the input block 26, the CPU 21 controls the communication block 29 which is the communication function 120 by use of the management function 121 to access the content server 11-A via the Internet 2 in step S1. In step S2, when the user specifies desired content through the input block 26, the CPU 21 controls the management function 121 to receive this specification information and inform the content server 11-A of the specified content from the communication block 29 via the Internet 2. As will be described with reference to the flowchart shown in FIG. 11, the content server 11-A which has received this information sends the encrypted content data. In step S3, the CPU 21 receives the encrypted content data through the communication block 29. In step S4, the CPU 21 supplies the received content data to the hard disk which is the storage unit 28 and stores them therein.

The following describes the content provision processing by the content server 11-A corresponding to the above-mentioned processing by the client 12, with reference to the flowchart shown in FIG. 11. It should be noted that the configuration of the client 12 shown in FIG. 3 will also be referred to as the configuration of the content server 11-A.

In step S21, the CPU 21 of the content server 11-A waits until accessed by the client 12 through the communication block 29 via the Internet 2; when the content server 11-A is accessed, the procedure goes to step S22, in which the CPU 21 captures the content specification information sent from the client 12. This content specification information is one that was given by the client 12 in step S2 shown in FIG. 10.

In step S23, the CPU 21 of the content server 11-A reads the content specified by the information captured in the processing of step S22 from among the content data stored in the storage unit 28. Then, in step S24, the CPU 21 supplies the content data read from the storage unit 28 to the encryption/decryption block 24 for encryption by content key Kc.

Since the content data stored in the storage unit 28 are encoded by the codec block 25 on the basis of ATRAC3, these encoded data are encrypted.

Obviously, the content data may be stored in the storage unit 28 as encrypted previously. In this case, the processing of step S24 may be skipped.

Next, in step S25, the CPU 21 of the content server 11-A adds the key information necessary for decrypting the encrypted content and the license ID for identifying the license necessary for using the content to the header of the format for transmitting the encrypted content. Then, in step S26, the CPU 21 of the content server 11-A sends the data formatted by the content encrypted in the processing of step S24 and the header added with the key and the license ID in the processing of step S25 to the accessing client 12 from the communication block 29 via the Internet 2.

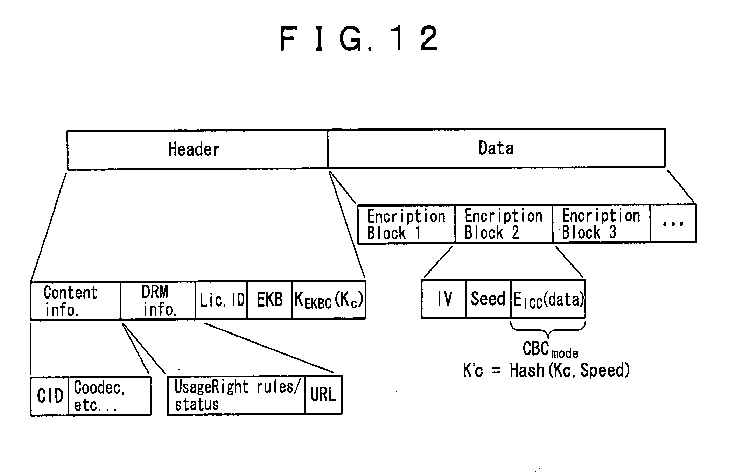

FIG. 12 shows a format configuration in which the content data are supplied from the content server 11-A to the client 12 in the manner as described above. As shown in the figure, this format is configured by a header and data.

The header contains content information, DRM (Digital Right Management) information, Lic. ID (license ID), EKB (Enabling Key Block), and $K_{EKBC}$(Kc) which is content key Kc encrypted by use of key $K_{EKBC}$ generated from the EKB.

The content information contains content ID (CID) for identifying the content data which are formatted as data and the method of coding/decoding that content.

Digital right management information DRM has the UsageRight/rules/status and an URL (Uniform Resource Locator) for using content. The usage right has reproduction time limit, content reproduction count, copy count, and check-out count, for example, as shown in FIG. 8.

A URL is the address information for accessing a license specified by the license ID. To be more specific, the address of the license server 11-B necessary for getting the license, in the case of the system shown in FIG. 2. The license ID is used to identify the license necessary for using the content which is recorded as data.

The data are configured by any number of encryption blocks. Each encryption block is configured by IV (Initial Vector), Seed, and data EK'c obtained by encrypting content data by key K'c.

Key K'c is configured by a value obtained by applying content key Kc and a seed value set by a random number to a hash function, as given from the equation below.

$$K'c = Hash(Kc, Seed)$$

Initial vector IV and Seed are set to each encryption block in different values.

This encryption is executed on an eight-byte basis by dividing the content data into units of eight bytes. The last eight bytes are encrypted in the CBC (Cipher Block Chaining) mode which is executed by use of the result of the encryption of the first eight bytes.

In the case of the CBC mode, when the content data of the first eight bytes are encrypted, these eight bytes are preceded by no eight bytes and therefore there is no preceding encryption result, so that the content data of the first eight bytes are encrypted by use of IV as the initial value.

The encryption in the CBC mode prevents the cracking of one encryption block, if any, from affecting the other encryption blocks.

As described above, the client 12 can get content from the content server 11-A.

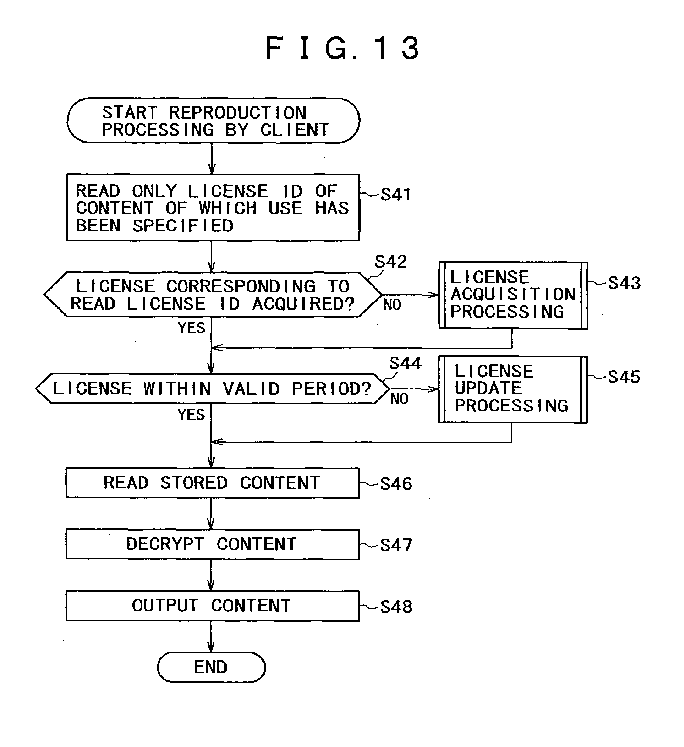

The reproduction of the obtained content requires to have the above-mentioned license information shown in FIG. 8. The following describes the processing in which the client 12 reproduces the obtained content, with reference to the flowchart shown FIG. 13.

In step S41, the CPU 21 of the client 12 gets the identification information (CID) of the content specified by the user through the input block 26. This identification information is configured by the title of content and the number assigned to each stored content for example.

When a particular piece of content is specified by the user, the CPU 21 reads the license ID (the ID of the license necessary for using that content) corresponding to that content. This license ID is written in the header of the encrypted content data as shown in FIG. 12.

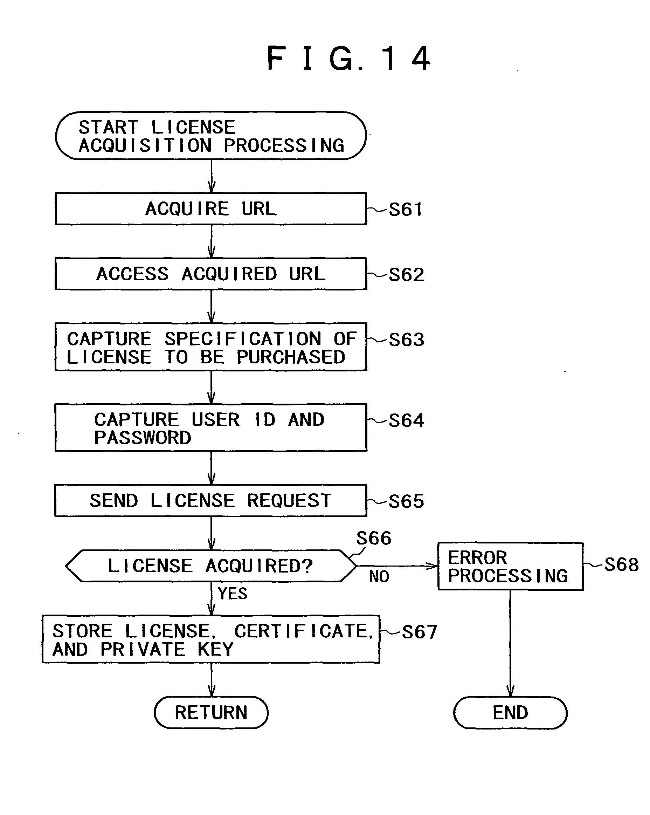

In step S42, the CPU 21 determines whether the license corresponding to the license ID read in step S41 has already been obtained by the client 12 and stored in the storage unit 28. If the license is found not yet obtained, the procedure goes to step S43, in which the CPU 21 executes the license acquisition processing. The details of this license acquisition processing will be described with reference to the flowchart shown in FIG. 14.

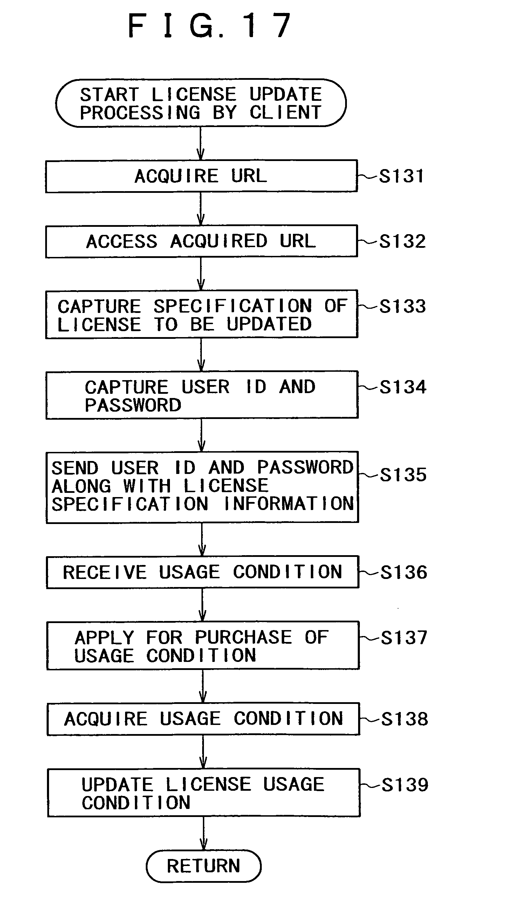

If the license is found already obtained in step S42 or if the license acquisition processing has been executed in step S43, then the procedure goes to step S44, in which the CPU 21 determines whether the obtained license is within its valid period. This validity check is executed by comparing the time limit specified as the contents of the license with the current date and time counted by the timer 20. If the validity of the license is found already expired, then the procedure goes to step S45, in which the CPU 21 executes license update processing. The details of this license update processing will be described with reference to the flowchart shown in FIG. 17.

If the license is found to be within its valid period in step S44 or if the license has been updated in step S45, then the procedure goes to step S46, in which the CPU 21 reads the encrypted content data from the storage unit 28 and load them into the RAM 23. In step S47, the CPU 21 supplies the encryption block data stored in the RAM 23 to the encryption/decryption block 24 in units of encryption blocks shown in FIG. 12, thereby decrypting the encrypted data by use of content key Kc.

A specific example of obtaining content key Kc is that key $K_{EKBC}$ included in EKB (FIG. 12) is obtained by use of DNK (Device Node Key) and content key Kc is obtained from data $K_{EKBC}$ (Kc) (FIG. 12) by use of this key $K_{EKBC}$.

In step S48, the CPU 21 supplies the content data decrypted by the encryption/decryption block 24 to the codec block 25 to decode the decrypted content data. Next, the CPU 21 supplies the data decoded by the codec block 25 to the output block 27 via the input/output interface 32 to convert the decoded data from digital to analog, thereby sounding the converted data from the speaker.

The following describes the details of the license acquisition processing executed in step S43 of FIG. 13, with reference to the flowchart shown in FIG. 14.

By registering the license server 11-B in advance, the client 12 obtains service data including leaf ID, DNK (Device Node Key), pair of private key and public key of the client 12, public key of license server, and certificate of each public key, in advance.

Leaf ID is the identification information assigned to each client and DNK is a device node key necessary for decrypting encrypted content key Kc included in the EKB corresponding to that license.

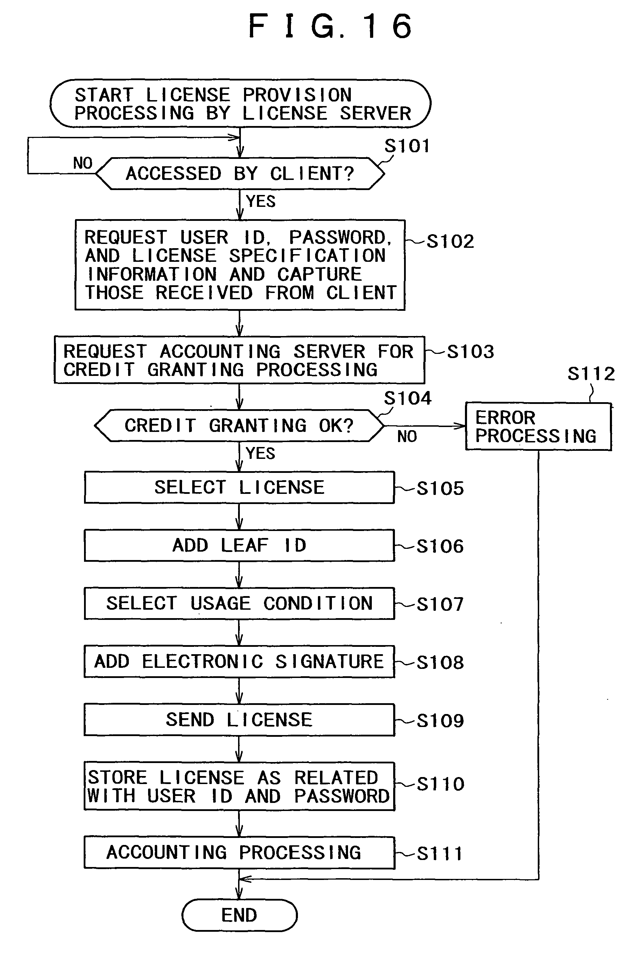

In step S61, the CPU 21 acquites, from the header shown in FIG. 12, the URL corresponding to the license ID to be processed now. As described above, this URL is the address to be accessed to get the license corresponding to the license ID also written in the header. Therefore, in step S62, the CPU 21 accesses the URL obtained in step S61. To be more specific, the communication block 29 accesses the license server 11-B via the Internet 2. At this moment, the license server 11-B requests the client 12 for the license specification information for specifying the license to be purchased (or the license necessary for using content), the user ID, and the password (in step S102 shown in FIG. 16). The CPU 21 shows these requested information on the display block of the output block 27. Referencing this display, the user enters the requested license specification information, user ID, and password through the input block 26. It should be noted that these user ID and password are those previously obtained by the user of the client 12 from the license server 11-B via the Internet 2.

In steps S63 and S64, the CPU 21 captures the license identification information entered by the user through the input block 26 and captures the user ID and the password. In step S65, the CPU 21 controls the communication block 29 to send the entered user ID and password, license specification information and a license request including the leaf ID included in service data (to be described later) to the license server 11-B via the Internet 2.

The license server 11-B sends back the license on the basis of the user ID, the password, and the license specification information (step S109) or, if the conditions have not been satisfied, does not send back the license (step S112).

In step S66, the CPU 21 determines whether the license has come from the license server 11-B. If the license is found received, the procedure goes to step S67, in which the CPU 21 supplies the received license to the storage unit 28 and stores it therein.

If the license is found not received in step S66, then the procedure goes to step S68, in which the CPU 21 executes an error handling operation. To be more specific, since the license for using content has not been obtained, the CPU 21 disables the processing of reproducing content.

As described above, each client 12 is allowed to use a particular piece of content only in case of acquiring the license corresponding to the license ID attached to the content data.

It should be noted that the license acquisition processing shown in FIG. 14 may also be executed before each user gets content.

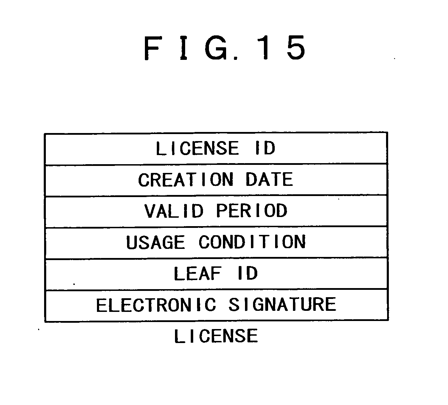

The license to be provided for the client 12 is as shown in FIG. 15 with the above-mentioned right file shown in FIG. 8 included in usage conditions.

The following describes the license provision processing by the license server 11-B which is executed in response to the license acquisition processing by the client 12 shown in FIG. 14, with reference to the flowchart shown in FIG. 16. It should be noted that, also in this case, the configuration of the client 12 shown in FIG. 3 is referred to as the configuration of the license server 11-B.

In step S101, the CPU 21 of the license server 11-B waits until accessed by the client 12. When the license server 11-B is accessed, the procedure goes to step S102, in which the CPU 21 requests the accessing client 12 for the user ID, the password, and the license specification information. When the user ID and password, the leaf ID and the license specification information (the license ID) have come from the client 12 in the processing of step S65 shown in FIG. 14 as described above, the CPU 21 of the license server 11-B receives and captures these items of information through the communication block 29.

Next, in step S103, the CPU 21 of the license server 11-B accesses the accounting server 11-C through the communication block 29 to request the credit granting of the user corresponding to the user ID and password. Receiving the credit granting request from the license server 11-B via the Internet 2, the accounting server 11-C checks past payment status of the user corresponding to the received user ID and password to see if this user failed to pay for the license for example. If the user is found to be free of any such failure, the accounting server 11-C sends the credit granting result for license granting; if the user is found to have failed the payment, the accounting server 11-C sends the credit granting result which disallows license granting.

In step S104, the CPU 21 of the license server 11-B determines whether or not the credit granting result received from the accounting server 11-C is allows license granting. If the credit granting result is found to be license granting, the procedure goes to step S105, in which the CPU 21 takes, from among the licenses stored in the storage unit 28, the license corresponding to the license specification information captured in step S102. Each license stored in the storage unit 28 is attached with license ID, version, date of creation, valid period, and other information in advance. In step S106, the CPU 21 adds the received leaf ID to this license. In step S107, the CPU 21 selects a usage condition associated with the license selected in step S105. If a usage conditions was specified by the user in step S102, the specified usage condition is added to the prepared usage conditions, as required. The CPU 21 adds the selected usage condition to the license.

In step S108, the CPU 21 appends its signature to the license by use of the private key of the license server, upon which the license having a configuration shown in FIG. 15 is formed.

Next, the procedure goes to step S109, in which the CPU 21 of the license server 11-B sends the license (having the configuration shown in FIG. 15) to the client 12 from the communication block 29 via the Internet 2.

In step S110, the CPU 21 of the license server 11-B stores in the storage unit 28 the license just sent (including the usage conditions and leaf ID) in step S109 as related with the user ID and password captured in step S102. In step S111, the CPU 21 executes accounting processing. To be more specific, the CPU 21 requests the accounting server 11-C from the communication block 29 for billing the user corresponding to the user ID and password. On the basis of this request, the accounting server 11-C bills the user. As described above, if the user fails to pay in response to this billing, the license granting request by this user will be rejected thereafter.

Namely, in this case, the credit granting result which disallows license granting is sent from the account server 11-C, so that the procedure goes from step S104 to step S112, in which the CPU 21 execute an error handling operation. To be more specific, the CPU 21 of the license server 11-B controls the communication block 29 to output a message that the requested license cannot be granted to the accessing client 12, thereby ending the processing.

In this case, as described above, the client 12 cannot get the license, so that the client 12 cannot use the requested content (namely, cannot decrypt the encrypted content).

FIG. 17 shows the details of the license update processing of step S45 shown in FIG. 13. The processing operations of steps S131 through S135 shown in FIG. 7 are basically the same as those of steps S61 through S65 shown in FIG. 15. It should be noted, however, that the CPU 21 captures the license ID for not the license to be purchased but the license to be updated in step S133. In step S135, the CPU 21 sends the license ID for the license to be updated to the license server 11-B along with the user ID and password.

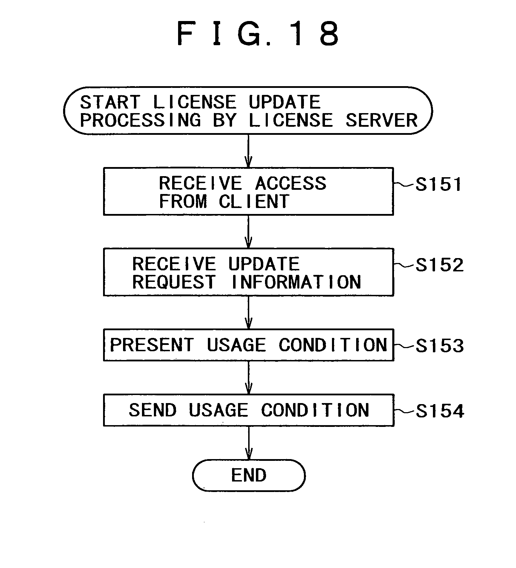

In response to the sending processing in step S135, the license server 11-B presents usage conditions (step S153 shown in FIG. 18) which will be described later. In step S136, the CPU 21 of the client 12 receives the presentation of usage conditions from the license server 11-B and outputs the usage conditions to the output block 27 to display them thereon. The user selects a predetermined usage condition from among the displayed usage conditions and/or adds a new condition through the input block 26. In step S137, the CPU 21 sends an application for purchasing the selected usage condition (the condition for updating the license) to the license server 11-B. In response to this application, as described later, the license server 11-B sends back the final usage condition (step S154 shown in FIG. 18). In step S138, the CPU 21 of the client 12 acquires the usage condition from the license server 11-B. In step S139, on the basis of this new usage condition, the CPU 21 of the client 12 updates the license usage condition stored in the storage unit 28.

FIG. 18 shows the license update processing which is executed by the license server 11-B in response to the above-mentioned license update processing by the client 12. First, in step S151, when accessed from the client 12, the CPU 21 of the license server 11-B receives the license update request information together with the license specification information transmitted from the client 12 in the step S135.

In step S153, following to the receiving the license update request in step S152, the CPU 21 reads out the usage condition (usage condition to be updated) corresponding to the license, from the storage unit 28, then transmits the usage condition to the client 12.

Following to the transmission of the usage condition as described above, where the client 12 applies for purchase of usage condition in step S137 in FIG. 17, the CPU 21 of the license server 11-B generates the data corresponding to the applied usage condition and sends the generated data to the client 12 in step S154. By use of the usage condition received in step S139 as described above, the client 12 updates the already registered license usage condition. It should be noted that the client to which the information processing apparatus according to the present invention may be applied to a PDA (Personal Digital Assistants), a cellular telephone, or a game machine for example in addition to a personal computer.

To execute the above-mentioned sequences of processing by software, the programs constituting the software are installed from networks or recording media for example into a computer built in dedicated hardware or a general-purpose computer such as a personal computer which can execute various functions by installing various programs.

The recording medium may be constituted of not only a package medium distributed for providing programs to users and separated from the computer, but also the ROM 22 or a hard disk in the storage unit 28 in which the programs are stored and which are provided to users as incorporated in computers. In this case, the package medium includes such as a magnetic disk 41 (including flexible disks), an optical disk 42 (including CD-ROM (Compact Disc-Read Only Memory) and DVD (Digital Versatile Disc), a magneto-optical disk 43 (including MD (Mini-Disc)), and a semiconductor memory 44, as shown in FIG. 3.

Term "system" as used herein denotes an entire apparatus composed of a plurality of units.

While the preferred embodiments of the present invention have been described using specific terms, such description is for illustrative purposes only, and it is to be understood that changes and variations may be made without departing from the spirit or scope of the appended claims.

## Claims

1. An information processing apparatus which can use content information within a range of usage conditions written in license information, comprising:

   storage means for storing first license information;
   receiving means for receiving second license information; and
   linking means for linking a part or all of said second license information with said first license information,

   wherein said content information is used within a range of license information obtained by linking said first license information with said second license information by said linking means.

2. The information processing apparatus according to claim 1, wherein said second license information includes license identification information indicative whether said second license information is license information to be overwritten or license information to be added.

3. The information processing apparatus according to claim 2, wherein, if said second license information is found by said license identification information to be the license information to be overwritten, said linking means writes a part or all of said second license information over said first license information.

4. The information processing apparatus according to claim 2, wherein, if said second license information is found by said license identification information to be the license information to be added, the linking means adds a part or all of said second license information to said first license information.

5. The information processing apparatus according to claim 1, wherein, by use of key information unique to said information processing apparatus, an electronic signature is appended to license information obtained by linking said first license information with said second license information by said linking means.

6. The information processing apparatus according to claim 2, wherein, if said first license information and said second license information each include right contents for specifying a period limitation and said second license information is found by said license identification information to be license information to be added, said linking means links said first license information with said second license information by a rule based on said right contents of said first license information.

7. The information processing apparatus according to claim 2, wherein, if said first license information and said second license information each include right contents for specifying a flag and said second license information is found by said license identification information to be license information to be added, said linking means links said first license information with said second license information by a rule based on said right contents of said first license information.

8. The information processing apparatus according to claim 2, wherein, if said first license information and said second license information each include right contents for specifying a count and said second license information is found by said license identification information to be license information to be added, said linking means links said first license information with said second license information by a rule based on said right contents of said first license information.

9. An information processing method which can use content information within a range of usage conditions written in license information, comprising the steps of:

   storing first license information;
   receiving second license information;

determining on the basis of license identification information for determining one of overwrite and add attributes whether said second license information received in said receiving step is license information to be overwritten or license information to be added; and linking a part or all of said second license information with said first license information on the basis of a result of the attribute determination made in said determining step,

wherein said content information is used within a range of license information obtained by linking said first license information with said second license information in said linking step.

10. The information processing method according to claim 9, wherein, if said second license information is found by said license identification information to be license information to be overwritten in said determining step, a part or all of said second license information is written over a part or all of said first license information in said linking step.

11. The information processing method according to claim 9, wherein, if said second license information is found by said license identification information to be license information to be added in said determining step, a part or all of said second license information is added to said first license information in said linking step.

12. The information processing method according to claim 9, wherein, if said first license information and said second license information each include right contents for specifying a period limitation and said second license information is found by said license identification information to be license information to be added in said determining step, said first license information is linked with said second license information by a rule based on said right contents of said first license information in said linking step.

13. The information processing method according to claim 9, wherein, if said first license information and said second license information each include right contents for specifying a flag and said second license information is found by said license identification information to be license information to be added in said determining step, said first license information is linked with said second license information by a rule based on said right contents of said first license information in said linking step.

14. The information processing method according to claim 9, wherein, if said first license information and said second license information each include right contents for specifying a count and said second license information is found by said license identification information to be license information to be added in said determining step, said first license information is linked with said second license information by a rule based on said right contents of said first license information in said linking step.

15. An information processing system having storage means for storing first license information, receiving means for receiving second license information, and linking means for linking a part or all of said second license information with said first license information, said information processing system comprising:

a client which uses content information within a range of license information obtained by linking said first license information with said second license information by said linking means; and a server which sends said second license information to said client on demand thereby through a network.

F I G. 1

1

SERVER 11

NETWORK 2

CLIENT 12

# F I G. 2

12-1
CLIENT

12-2
CLIENT

2
INTERNET

11-A
CONTENT
SERVER

11-B
LICENSE
SERVER

11-C
ACCOUNTING
SERVER

EP 1 486 852 A2

# F I G. 3

**12**

EP 1 486 852 A2

# F I G. 4

SERVER    11

CLIENT    12

CONTENT

LICENSE

# F I G. 5

Protected Content File

| EKB | $E_{K_{root}}(K_c)$ | $E_{k_{c'}}$(Content) |
|---|---|---|

Client — DNK →

$K_{root}$

$K_c$ → $K_{c'}$

Content

$K_{sub}$

UsageRight

# F I G. 6

12

COMMUNICATION FUNCTION ~120

MANAGEMENT FUNCTION ~121

PROCESSING UNIT ~122

ENCRYPTION FUNCTION ~123

STORAGE UNIT ~124

# F I G. 7

11

COMMUNICATION FUNCTION ~110

MANAGEMENT FUNCTION ~111

PROCESSING UNIT ~112

ENCRYPTION FUNCTION ~113

# F I G. 8

Date Name
------------------------------------------------

UsageRight Type

CID

UsageRight Disjunction Rules

Leaf ID

Device and Media Categories for Check Out

Check Out Max Count

Device and Media Categories for copy

Copy Max Count

AT3CD Bum Max Count

start_time

end_time

period_time

# F I G. 9

●

S201
ADD ATTRIBUTE OR OVERWRITE ATTRIBUTE?

ADD ATTRIBUTE — OVERWRITE ATTRIBUTE

S203 — DETERMINE PERIOD SPECIFICATION OF NEW RIGHT

OVERWRITE EXISTING RIGHT WITH NEW RIGHT — S202

S204
ABSOLUTE PERIOD OR RELATIVE PERIOD SPECIFIED?

END DATE — CHOOSE LATER ONE

COMPARE START AND END DATES OF EXISTING AND NEW RIGHTS — S205

DETERMINE ADDITION RULE IN RELATIVE PERIOD SPECIFICATION — S207

START DATE: CHOOSE EARLIER ONE END DATE: CHOOSE LATER ONE — S206

S208
CASE 1 OR CASE 2?

CASE 1 — CASE 2

COMPARE END DATE FROM START DATE — S209

DETERMINE VALIDITY OF END DATE OF EXISTING RIGHT — S212

COMPARE END AND STRAT DATES OF EXISTING AND NEW RIGHTS — S210

START DATE: CHOOSE EARLIER ONE END DATE: CHOOSE LATER ONE — S211

S213
VALID OR INVALID?

VALID — INVALID

S214 — COMPUTE END DATE WITH END DATE OF EXISTING RIGHT USED AS ORIGIN

COMPUTE END DATE WITH DATE SPECIFIED BY RELATIVE PERIOD USED AS ORIGIN — S215

# F I G. 1 0

```
   ┌─────────────────────────────────┐
   │ START DOWNLOAD PROCESSING        │
   │ BY CLIENT                        │
   └─────────────────────────────────┘
                  │
                  ▼
   ┌─────────────────────────────────┐
   │  ACCESS CONTENT SERVER           │──S1
   └─────────────────────────────────┘
                  │
                  ▼
   ┌─────────────────────────────────┐
   │  SPECIFY CONTENT                 │──S2
   └─────────────────────────────────┘
                  │
                  ▼
   ┌─────────────────────────────────┐
   │  RECEIVE CONTENT                 │──S3
   └─────────────────────────────────┘
                  │
                  ▼
   ┌─────────────────────────────────┐
   │  STORE CONTENT                   │──S4
   └─────────────────────────────────┘
                  │
                  ▼
          ┌───────────────┐
          │     END       │
          └───────────────┘
```

# F I G. 1 1

```
        ┌─────────────────────────┐
        │   START PROCESSING       │
        │   BY CONTENT SERVER      │
        └─────────────────────────┘
                     │
    ┌────────────────▼──────────────┐        S21
    │        NO  ◁ ACCESSED BY CLIENT? ▷
    └───────────────────────────────┘
                     │ YES
        ┌─────────────────────────┐
        │ CAPTURE INFORMATION FOR │ ~S22
        │ SPECIFYING CONTENT      │
        └─────────────────────────┘
                     │
        ┌─────────────────────────┐
        │ READ SPECIFIED CONTENT  │ ~S23
        └─────────────────────────┘
                     │
        ┌─────────────────────────┐
        │    ENCRYPT CONTENT      │ ~S24
        └─────────────────────────┘
                     │
        ┌─────────────────────────┐
        │ ADD KEY NECESSARY FOR   │ ~S25
        │ DECRYPTION AND LICENSE  │
        │ ID TO HEADER            │
        └─────────────────────────┘
                     │
        ┌─────────────────────────┐
        │ ADD HEADER TO ENCRYPTED │ ~S26
        │ CONTENT AND OUTPUT IT   │
        └─────────────────────────┘
                     │
              ┌───────────┐
              │    END    │
              └───────────┘
```

# F I G. 1 2

| Header | Data |
|---|---|

Encription Block 1 | Encription Block 2 | Encription Block 3 | ...

| Content info. | DRM info. | Lic. ID | EKB | $K_{EKBC}(K_c)$ |
|---|---|---|---|---|

| IV | Seed | $E_{ICC}(data)$ |
|---|---|---|

| CID | Coodec, etc... | | UsageRight rules/ status | URL |
|---|---|---|---|---|

$CBC_{mode}$

$K'c = Hash(Kc, Speed)$

EP 1 486 852 A2

# F I G. 1 3

```
        ┌──────────────────────────┐
        │   START REPRODUCTION     │
        │   PROCESSING BY CLIENT   │
        └──────────────────────────┘
                    │
                    ▼
        ┌──────────────────────────┐
        │ READ ONLY LICENSE ID OF  │~S41
        │ CONTENT OF WHICH USE HAS │
        │ BEEN SPECIFIED           │
        └──────────────────────────┘
                    │
                    ▼                S42        ┌─────────────┐
        < LICENSE CORRESPONDING TO  >           │ LICENSE     │~S43
        < READ LICENSE ID ACQUIRED? >──NO──────▶│ ACQUISITION │
                    │                           │ PROCESSING  │
                   YES                          └─────────────┘
                    │◀──────────────────────────────────┘
                    ▼                S44        ┌─────────────┐
        < LICENSE WITHIN VALID PERIOD? >──NO───▶│ LICENSE     │~S45
                    │              NO           │ UPDATE      │
                   YES                          │ PROCESSING  │
                    │                           └─────────────┘
                    │◀──────────────────────────────────┘
                    ▼
        ┌──────────────────────────┐
        │   READ STORED CONTENT    │~S46
        └──────────────────────────┘
                    │
                    ▼
        ┌──────────────────────────┐
        │     DECRYPT CONTENT      │~S47
        └──────────────────────────┘
                    │
                    ▼
        ┌──────────────────────────┐
        │     OUTPUT CONTENT       │~S48
        └──────────────────────────┘
                    │
                    ▼
              ┌──────────┐
              │   END    │
              └──────────┘
```

# FIG. 14

```
                    ╭─────────────────────────╮
                    │  START LICENSE          │
                    │  ACQUISITION PROCESSING │
                    ╰─────────────────────────╯
                                │
                                ▼
          ┌──────────────────────────────────┐
          │        ACQUIRE URL               │ ～S61
          └──────────────────────────────────┘
                                │
                                ▼
          ┌──────────────────────────────────┐
          │     ACCESS ACQUIRED URL          │ ～S62
          └──────────────────────────────────┘
                                │
                                ▼
          ┌──────────────────────────────────┐
          │  CAPTURE SPECIFICATION OF        │ ～S63
          │  LICENSE TO BE PURCHASED         │
          └──────────────────────────────────┘
                                │
                                ▼
          ┌──────────────────────────────────┐
          │  CAPTURE USER ID AND             │ ～S64
          │  PASSWORD                        │
          └──────────────────────────────────┘
                                │
                                ▼
          ┌──────────────────────────────────┐
          │    SEND LICENSE REQUEST          │ ～S65
          └──────────────────────────────────┘
                                │              S66
                                ▼
          ◁────────────────────────────────▷         ┌──────────────┐
              LICENSE ACQUIRED?          NO────────▶ │ ERROR        │ ～S68
          ◁────────────────────────────────▷         │ PROCESSING   │
                                │                     └──────────────┘
                               YES                          │
                                ▼                           │
          ┌──────────────────────────────────┐              │
          │ STORE LICENSE, CERTIFICATE,      │ ～S67        │
          │ AND PRIVATE KEY                  │              │
          └──────────────────────────────────┘              │
                                │                           │
                                ▼                           ▼
                        ╭─────────────╮             ╭─────────────╮
                        │   RETURN    │             │    END      │
                        ╰─────────────╯             ╰─────────────╯
```

# F I G. 1 5

| LICENSE ID |
| --- |
| CREATION DATE |
| VALID PERIOD |
| USAGE CONDITION |
| LEAF ID |
| ELECTRONIC SIGNATURE |

LICENSE

# F I G. 1 6

```
      ┌─────────────────────────────────┐
      │  START LICENSE PROVISION         │
      │  PROCESSING BY LICENSE SERVER    │
      └─────────────────────────────────┘
                    │
        ┌───────────▼────────────┐  S101
   NO   │   ACCESSED BY CLIENT?  │
 ◄──────┤                        │
        └───────────┬────────────┘
                    │ YES
      ┌─────────────▼───────────────────┐
      │  REQUEST USER ID, PASSWORD,      │ S102
      │  AND LICENSE SPECIFICATION       │
      │  INFORMATION AND CAPTURE         │
      │  THOSE RECEIVED FROM CLIENT      │
      └─────────────┬───────────────────┘
                    │
      ┌─────────────▼───────────────────┐
      │  REQUEST ACCOUNTING SERVER FOR   │ S103
      │  CREDIT GRANTING PROCESSING      │
      └─────────────┬───────────────────┘
                    │                           S112
        ┌───────────▼────────────┐ S104    ┌──────────────┐
        │   CREDIT GRANTING OK?   ├────────►│  ERROR       │
        │                         │   NO    │  PROCESSING  │
        └───────────┬────────────┘          └──────┬───────┘
                    │ YES                          │
      ┌─────────────▼───────────────────┐          │
      │      SELECT LICENSE             │ S105     │
      └─────────────┬───────────────────┘          │
      ┌─────────────▼───────────────────┐          │
      │      ADD LEAF ID                │ S106     │
      └─────────────┬───────────────────┘          │
      ┌─────────────▼───────────────────┐          │
      │   SELECT USAGE CONDITION        │ S107     │
      └─────────────┬───────────────────┘          │
      ┌─────────────▼───────────────────┐          │
      │   ADD ELECTRONIC SIGNATURE      │ S108     │
      └─────────────┬───────────────────┘          │
      ┌─────────────▼───────────────────┐          │
      │      SEND LICENSE               │ S109     │
      └─────────────┬───────────────────┘          │
      ┌─────────────▼───────────────────┐          │
      │  STORE LICENSE AS RELATED        │ S110     │
      │  WITH USER ID AND PASSWORD       │          │
      └─────────────┬───────────────────┘          │
      ┌─────────────▼───────────────────┐          │
      │   ACCOUNTING PROCESSING         │ S111     │
      └─────────────┬───────────────────┘          │
                    │◄───────────────────────────────┘
              ┌─────▼─────┐
              │    END    │
              └───────────┘
```

# F I G. 1 7

```
   ┌─────────────────────────────┐
   │  START  LICENSE  UPDATE     │
   │  PROCESSING  BY  CLIENT     │
   └─────────────────────────────┘
                 │
                 ▼
   ┌─────────────────────────────┐
   │      ACQUIRE  URL           │──S131
   └─────────────────────────────┘
                 │
                 ▼
   ┌─────────────────────────────┐
   │   ACCESS  ACQUIRED  URL     │──S132
   └─────────────────────────────┘
                 │
                 ▼
   ┌─────────────────────────────┐
   │  CAPTURE  SPECIFICATION  OF │──S133
   │  LICENSE  TO  BE  UPDATED   │
   └─────────────────────────────┘
                 │
                 ▼
   ┌─────────────────────────────┐
   │   CAPTURE  USER  ID  AND    │──S134
   │   PASSWORD                  │
   └─────────────────────────────┘
                 │
                 ▼
   ┌─────────────────────────────┐
   │ SEND  USER  ID  AND  PASSWORD│──S135
   │ ALONG  WITH  LICENSE        │
   │ SPECIFICATION  INFORMATION  │
   └─────────────────────────────┘
                 │
                 ▼
   ┌─────────────────────────────┐
   │  RECEIVE  USAGE  CONDITION  │──S136
   └─────────────────────────────┘
                 │
                 ▼
   ┌─────────────────────────────┐
   │   APPLY  FOR  PURCHASE  OF   │──S137
   │   USAGE  CONDITION          │
   └─────────────────────────────┘
                 │
                 ▼
   ┌─────────────────────────────┐
   │  ACQUIRE  USAGE  CONDITION  │──S138
   └─────────────────────────────┘
                 │
                 ▼
   ┌─────────────────────────────┐
   │  UPDATE  LICENSE  USAGE     │──S139
   │  CONDITION                  │
   └─────────────────────────────┘
                 │
                 ▼
          ┌──────────────┐
          │   RETURN     │
          └──────────────┘
```

# F I G. 1 8

START LICENSE UPDATE
PROCESSING BY LICENSE SERVER

RECEIVE ACCESS
FROM CLIENT — S151

RECEIVE UPDATE
REQUEST INFORMATION — S152

PRESENT USAGE CONDITION — S153

SEND USAGE CONDITION — S154

END